# FASCICULE DE BREVET EUROPEEN

(11) **EP 3 577 517 B1**
(45) Date de publication et mention de la délivrance du brevet: **21.02.2024**
(21) Numéro de dépôt: 18706415.9
(22) Date de dépôt: 31.01.2018
(51) Int. Cl.: G02B 27/48, G02B 27/01, H04N 9/31, G02B 27/28

(54) **DISPOSITIF DE FORMATION D'IMAGE ET AFFICHEUR TÊTE HAUTE COMPRENANT UN TEL DISPOSITIF**
BILDGEBUNGSVORRICHTUNG UND HEAD-UP-ANZEIGE MIT SOLCH EINER VORRICHTUNG
IMAGING DEVICE AND HEAD-UP DISPLAY COMPRISING SUCH A DEVICE

(30) Priorité: 02.02.2017 FR 1750899
(43) Date de publication de la demande: 11.12.2019
(73) Titulaire: Valeo Comfort and Driving Assistance, 94000 Créteil (FR)
(72) Inventeur: IRZYK, Michael, 94046 Créteil Cedex (FR)
(74) Mandataire: Delplanque, Arnaud
(86) Numéro de dépôt international: PCT/EP2018/052455
(87) Numéro de publication internationale: WO 2018/141824

(56) Documents cités:
- WO-A1-2010/125562
- FR-A1- 3 015 704
- US-A1- 2012 182 487

## Description

### DOMAINE TECHNIQUE AUQUEL SE RAPPORTE L'INVENTION

La présente invention concerne le traitement de l'effet de chatoiement (ou *"speckle"* selon l'appellation anglo-saxonne correspondante) dans un dispositif de formation d'image pour afficheur tête haute.

Elle concerne plus particulièrement un dispositif de formation d'image et un afficheur tête haute comprenant un tel dispositif.

L'invention s'applique particulièrement avantageusement dans le cas où l'afficheur tête haute utilise des sources lumineuses de type laser.

### ARRIERE-PLAN TECHNOLOGIQUE

On connaît, par exemple du document FR 3 015 704, un dispositif de formation d'image, comprenant un module de formation de faisceau conçu pour générer un faisceau lumineux, des moyens d'atténuation du faisceau lumineux, un diffuseur éclairé par le faisceau lumineux atténué de manière à former une image, et un module de pilotage conçu pour commander l'atténuation du faisceau lumineux par les moyens d'atténuation.

Dans ce document, les moyens d'atténuation permettent une atténuation réglable du faisceau lumineux afin d'adapter par exemple la luminance de l'image affichée à la luminosité ambiante.

On sait par ailleurs que l'utilisation de sources lumineuses de type laser entraîne un phénomène de chatoiement du fait de la cohérence de la lumière laser, comme expliqué par exemple dans le document FR 2 986 873.

Les documents FR 3 015 704 A1, US 2012/182487 A1 et WO 2010/125562 A1 divulguent des systèmes connus.

### OBJET DE L'INVENTION

Dans ce contexte, la présente invention propose un dispositif de formation d'image tel que décrit dans la revendication 1.

Ainsi, tout en conservant une atténuation quasiment identique pour les deux trames successives, on effectue une atténuation légèrement différente d'une trame à l'autre, ce qui permet de limiter le phénomène de chatoiement qui se produit en présence de sources lumineuses cohérentes.

Selon d'autres caractéristiques optionnelles (et donc non limitatives) :
- les moyens d'atténuation du faisceau lumineux comprennent une cellule à cristaux liquides apte à impartir au faisceau lumineux une polarisation variable en fonction d'une tension appliquée à ladite cellule ;
- les moyens d'atténuation comprennent un élément de polarisation ayant une direction donnée de polarisation ;
- le module de pilotage est conçu pour déterminer ladite tension en fonction d'une consigne d'atténuation (identique pour la première trame et pour la seconde trame) ;
- la tension est positive pendant ladite première trame et négative pendant ladite seconde trame ;
- le module de pilotage est conçu pour commander une atténuation constante égale à la première valeur au cours de la première trame (et une atténuation constante égale à la seconde valeur au cours de la seconde trame) ;
- le dispositif comprend une unité de balayage conçue pour balayer une face du diffuseur au moyen du faisceau lumineux atténué ;
- l'unité de balayage comprend un miroir mobile.

L'invention propose également un afficheur tête haute comprenant un dispositif de formation d'image tel que proposé ci-dessus et un système d'imagerie conçu pour projeter ladite image.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un afficheur tête haute conforme à l'invention ;
- la figure 2 représente un exemple de variation temporelle de la luminosité ambiante ;
- la figure 3 représente l'évolution temporelle d'une tension appliquée à une cellule à cristaux liquides selon un premier exemple de réalisation de l'invention ;
- la figure 4 représente l'évolution temporelle d'une tension appliquée à une cellule à cristaux liquides selon un second exemple de réalisation de l'invention ; et
- la figure 5 représente l'évolution temporelle d'une tension appliquée à une cellule à cristaux liquides selon un troisième exemple de réalisation de l'invention.

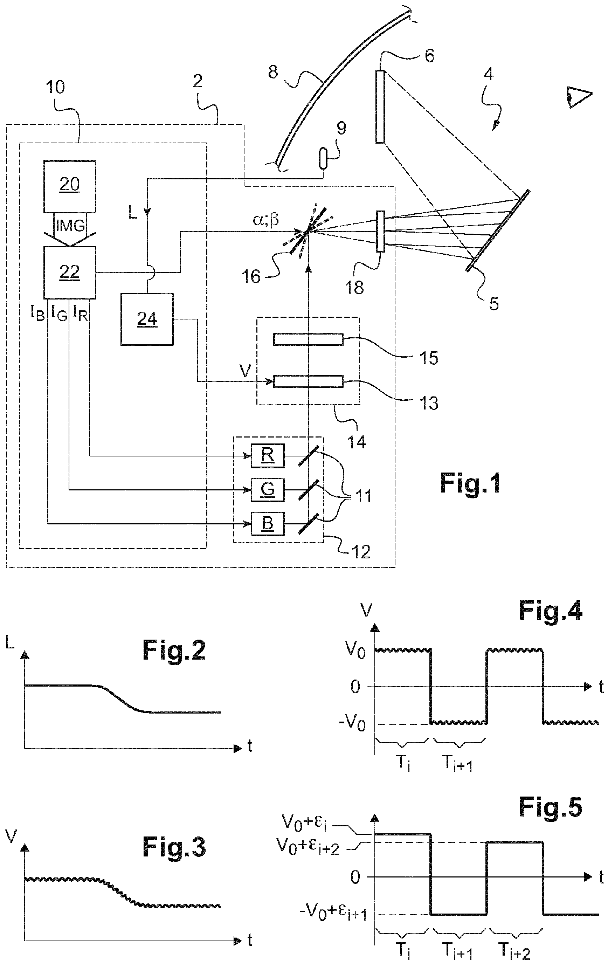

La figure 1 représente schématiquement les éléments principaux d'un afficheur tête haute pour véhicule, ici pour véhicule automobile.

Un tel afficheur tête haute comprend un dispositif de formation d'image 2 conçu pour générer (comme expliqué ci-après) un faisceau lumineux représentant une image et un système d'imagerie 4 conçu pour projeter cette image dans le champ de vision du conducteur du véhicule.

Le système d'imagerie 4 comprend par exemple un miroir de renvoi 5 et une lame partiellement transparente (ou combineur) 6 située entre le pare-brise du véhicule 8 et le conducteur. Dans ce cas, le miroir de renvoi 5 est disposé de manière à renvoyer le faisceau lumineux généré par le dispositif de formation d'image 2 en direction de la lame partiellement transparente 6. En variante, le miroir de renvoi 5 pourrait renvoyer le faisceau lumineux généré par le dispositif de formation d'image 2 directement sur le pare-brise 8 (qui joue alors le rôle de la lame partiellement transparente susmentionnée).

Le dispositif de formation d'image 2 comprend un module de pilotage 10, un module de formation de faisceau 12, des éléments d'atténuation 14, un miroir mobile 16 et un diffuseur 18.

Le module de formation de faisceau 12 comprend une pluralité de sources de lumière (ici des diodes laser R, G, B) qui émettent chacune un faisceau lumineux essentiellement monochromatique. On utilise ici trois sources de lumière R, G, B qui émettent respectivement une lumière rouge, une lumière verte et une lumière bleue.

Le module de formation de faisceau 12 comprend également des moyens de recombinaison des différents faisceaux monochromatiques (par exemple des miroirs dichroïques 11) afin d'obtenir en sortie du module de formation de faisceau un faisceau polychromatique.

Dans l'exemple décrit ici, le faisceau polychromatique émis par le module de formation de faisceau 12 traverse les éléments d'atténuation 14 avant d'être réfléchi sur le miroir mobile 16. On pourrait toutefois prévoir en variante que l'un des éléments d'atténuation 14 au moins soit situé à l'aval du miroir mobile 16.

On pourrait également prévoir un polariseur additionnel au sein du module de formation de faisceau 12 (ou à l'aval immédiat de celui-ci) afin d'obtenir en sortie du module de formation de faisceau 12 une lumière polarisée rectilignement (par exemple lorsque les sources de lumière ne génèrent pas une lumière suffisamment polarisée). L'un au moins des éléments d'atténuation 14 pourrait par ailleurs être situé dans le module de formation de faisceau 12. Dans ce cas, on peut éventuellement prévoir un élément d'atténuation dédié pour chaque source de lumière R, G, B, situé par exemple à l'aval immédiat de la source de lumière R, G, B concernée.

Indépendamment de leur positionnement, les éléments d'atténuation comprennent ici une cellule à cristaux liquides 13 et un élément de polarisation 15.

La cellule à cristaux liquides 13 impartit au faisceau lumineux qui la traverse une polarisation variable en fonction d'une tension V appliquée à la cellule à cristaux liquides 13 par le module de pilotage 10.

L'élément de polarisation 15 laisse passer quant à lui seulement une composante de la lumière ayant une direction de polarisation donnée.

Ainsi, par la combinaison de la cellule à cristaux liquides 13 et de l'élément de polarisation 15, le faisceau lumineux est atténué, avec une atténuation variable en fonction de la tension V appliquée à la cellule à cristaux liquides 13.

L'orientation du miroir mobile 16 est commandée par le module de pilotage 10 de manière à ce que le faisceau lumineux réfléchi par le miroir mobile 16 balaie la face arrière du diffuseur 18.

Le diffuseur 18 émet ainsi en face avant un faisceau lumineux représentant l'image à afficher (le faisceau ayant en chaque point un léger étalement angulaire du fait de l'action du diffuseur 18).

Comme déjà indiqué, cette image est projetée dans le champ de vision du conducteur au moyen du système d'imagerie 4.

Le module de pilotage 10 comprend une unité de génération 20 de données IMG représentatives d'une image à afficher, une unité de commande de puissance 22 des sources lumineuses R, G, B et une unité de commande d'atténuation 24.

On donne ici une description fonctionnelle du module de pilotage 10. Le module de pilotage 10 peut en pratique être réalisé sous la forme d'une architecture à processeur, auquel cas les unités mentionnées ci-dessus peuvent être réalisées par des moyens logiciels (instructions exécutées par le processeur) et/ou par des moyens matériels.

L'unité de génération 20 de données IMG représentatives d'une image à afficher fait par exemple partie d'un système de navigation : l'image à afficher comprend alors des informations communiquées au conducteur par le système de navigation. En variante, l'unité de génération de données 20 pourrait être un module de communication recevant des informations à afficher d'un système externe. De manière générale, les données IMG représentatives d'une image à afficher sont mémorisées dans une mémoire du module de pilotage 10. Ces données IMG comprennent par exemple des coordonnées colorimétriques tridimensionnelles de chaque point (ou pixel) de l'image à afficher.

Pour chaque point (ou pixel) de l'image à afficher, l'unité de commande de puissance 22 génère d'une part des signaux I_{R}, I_{G}, I_{B} de commande de l'intensité de chacune des sources de lumière R, G, B correspondants à la couleur du point concerné selon les données IMG. L'unité de commande de puissance 22 commande d'autre part l'orientation du miroir mobile 16 (par exemple déterminée par deux angles α, β) de sorte que le faisceau réfléchi soit dirigée vers le point du diffuseur 18 correspondant au point de l'image à afficher mentionné ci-dessus.

Ainsi, en commandant l'orientation du miroir mobile 16 de manière à ce que le faisceau réfléchi par le miroir mobile 16 parcourt (i.e. balaie) toute la surface utile de la face arrière du diffuseur 18, et en commandant de manière synchronisée l'intensité des sources de lumière R,G,B (conformément à ce qu'indique les données IMG), l'unité de commande de puissance 22 permet la formation au niveau du diffuseur 18 d'un faisceau lumineux correspondant à l'image à afficher.

Afin d'obtenir une image persistante, ou une image variable (vidéo), le balayage du diffuseur 18 est périodiquement répété pour afficher successivement une pluralité d'images ou trames (ces images ou trames successives étant identiques dans le cas d'une image persistante et différentes dans le cas d'une image variable).

L'unité de commande d'atténuation 24 détermine la tension V à appliquer à la cellule à cristaux liquide 13 en fonction d'une consigne d'atténuation, déterminée ici en fonction de la luminosité ambiante L mesurée par un capteur de luminosité 9 (situé ici dans l'habitacle du véhicule, dans la région d'implantation de l'afficheur tête haute). En variante (ou en complément), cette consigne d'atténuation pourrait être réglée par le conducteur du véhicule au moyen d'un bouton dédié, éventuellement virtuel.

L'unité de commande d'atténuation 24 détermine par exemple cette tension V par lecture, au sein d'une table de correspondance (ou LUT pour *"Look-Up Table*")*,* d'une valeur associée à la consigne d'atténuation.

La tension V déterminée par l'unité de commande d'atténuation 24 est appliquée à la cellule à cristaux liquides 13.

Les figures 2 et 3 représentent un exemple de variation temporelle de la luminosité ambiante L et l'évolution temporelle correspondante de la tension V selon un premier exemple de réalisation de l'invention.

Selon ce premier exemple, la tension V appliquée à la cellule à cristaux liquides 13 est formée d'une première composante V₀(L) qui dépend de la luminosité ambiante mesurée L et d'une seconde composante b(t) ayant une valeur variant aléatoirement dans le temps : V = V₀(L) + b(t). La tension V est ici la somme de la première composante V₀(L) et de la seconde composante b(t).

La seconde composante b(t) a donc les caractéristiques d'un signal bruité. Son amplitude est par ailleurs limitée, par exemple à une proportion donnée (comprise entre 1/100 et 1/10) de la tension maximale Vₘₐₓ applicable à la cellule à cristaux liquides 13.

L'unité de commande d'atténuation 24 détermine par exemple la première composante V₀(L) par lecture dans une table de correspondance, comme indiqué plus haut, et la seconde composante b(t) par génération (numérique) de valeurs aléatoires. On prévoit ici que la seconde composante b(t) prenne une pluralité de valeurs distinctes pour chaque trame, typiquement plus de 10 valeurs distinctes pour chaque trame.

Comme visible en référence aux figures 2 et 3, la tension V permet une atténuation du faisceau lumineux variable principalement avec la luminosité ambiante L, mais qui évolue en outre aléatoirement et est ainsi différente d'une trame à l'autre (ceci étant vrai pour tout pixel de l'image). On limite ainsi le phénomène de chatoiement qui risquerait d'apparaître dans l'image affichée du fait de l'utilisation de sources de lumière cohérente (ici des sources laser).

La figure 4 représente l'évolution temporelle de la tension V selon un second mode de réalisation de l'invention.

Selon ce mode de réalisation, la tension V est successivement positive (pour une trame Tᵢ) puis négative (pour la trame suivante Tᵢ₊₁) afin d'améliorer la durée de vie de la cellule à cristaux liquides 13, comme expliqué dans le document FR 3 015 704.

Précisément, on prévoit ici que la tension V appliquée à la cellule à cristaux liquides 13 soit formée d'une première composante valant successivement V₀ (pour une trame Tᵢ donnée) et -V₀ (pour la trame Tᵢ₊₁ suivant la trame donnée Tᵢ), et d'une seconde composante ayant une valeur aléatoire b(t) (qui correspond ainsi à un signal bruité). La tension V est la somme de la première composante et de la seconde composante.

L'amplitude de la seconde composante b(t) est toutefois limitée par rapport à celle de la première composante, par exemple à une proportion donnée (comprise entre 1/100 et 1/10) de la tension maximale Vₘₐₓ applicable à la cellule à cristaux liquides 13. On prévoit par ailleurs que la seconde composante b(t) prenne une pluralité de valeurs distinctes pour chaque trame, typiquement plus de 10 valeurs distinctes pour chaque trame.

On remarque que, dans l'exemple décrit, la consigne d'atténuation est constante sur la période temporelle représentée en figure 4 ; on considère en effet ici que la luminosité ambiante L mesurée par le capteur 9 est constante (et qu'aucune modification de la consigne d'atténuation n'est sollicitée par le conducteur) sur cette période temporelle.

L'application d'une tension V ayant une valeur absolue proche de V₀ (au signal bruité b(t) près) permet d'obtenir une atténuation sensiblement constante (valant approximativement la consigne d'atténuation), typiquement à 10 % près. Toutefois, grâce à la présence de la seconde composante b(t) aléatoire ou bruitée, l'atténuation est légèrement différente (pour un même pixel de l'image) d'une trame Tᵢ à la trame suivante Tᵢ₊₁, de sorte que le phénomène de chatoiement (généré par l'utilisation de sources lumineuses cohérentes) est atténué.

Comme pour le premier mode de réalisation, on prévoit par exemple ici que l'unité de commande d'atténuation 24 détermine la valeur V₀ de la première composante par lecture dans une table de correspondance et la seconde composante b(t) par génération (numérique) de valeurs aléatoires.

La figure 5 représente l'évolution temporelle de la tension V selon un troisième mode de réalisation de l'invention.

L'unité de commande d'atténuation 24 détermine ici encore la tension V à appliquer à la cellule à cristaux liquides 2 en combinant (ici en sommant) une première composante et une seconde composante.

Comme dans le second mode de réalisation décrit ci-dessus en référence à la figure 4, la première composante vaut successivement une valeur V₀ (permettant d'obtenir la consigne d'atténuation) pour une trame Tᵢ donnée et la valeur opposée -V₀ (permettant elle aussi d'obtenir la consigne d'atténuation) pour la trame suivante Tᵢ₊₁. On évite ainsi un vieillissement prématuré de la cellule à cristaux liquides, comme expliqué dans le document FR 3 015 704. Comme déjà indiqué, la valeur V₀ est par exemple lue dans une table de correspondance en association avec la consigne d'atténuation.

La seconde composante a quant à elle une valeur εᵢ constante sur une trame Tᵢ donnée, mais varie d'une trame à l'autre. On prévoit par exemple pour ce faire que l'unité de commande d'atténuation 24 détermine par tirage aléatoire, pour chaque trame Tⱼ, une valeur εⱼ ayant une amplitude limitée (par exemple inférieure à une proportion donnée, comprise ici entre 1/100 et 1/10, de la tension maximale Vₘₐₓ applicable à la cellule à cristaux liquides 13) et utilise cette valeur εⱼ en tant que seconde composante.

Comme représenté en figure 5, la tension V appliquée à la cellule à cristaux liquides 13 vaut donc, respectivement pour trois trames successives Tᵢ, Tᵢ₊₁, Tᵢ₊₂ : V₀+εᵢ, -V₀+εᵢ₊₁ V₀+εᵢ₊₂.

Du fait que l'amplitude de la seconde composante est limitée, la valeur absolue de la tension V appliquée à la cellule à cristaux liquides 13 est sensiblement constante et l'atténuation générée par les éléments d'atténuation 14 est donc elle aussi sensiblement constante (typiquement à 10 % près).

Par contre, du fait de la variation de la seconde composante (d'une valeur εᵢ à une valeur εᵢ₊₁ différente de εᵢ), l'atténuation est (légèrement) variable d'une trame Tᵢ à l'autre (trame suivante Tᵢ₊₁), ce qui permet de limiter le phénomène de chatoiement généré par l'utilisation de sources de lumière cohérente (ici des sources laser).

## Revendications

1. Dispositif de formation d'image (2), comprenant :
- un module de formation de faisceau (12) conçu pour générer un faisceau lumineux cohérent,
- des moyens d'atténuation (14) du faisceau lumineux,
- un diffuseur (18) éclairé par le faisceau lumineux atténué de manière à former une image,
- un module de pilotage (10) conçu pour commander l'atténuation du faisceau lumineux par les moyens d'atténuation (14),
**caractérisé en ce que** le module de pilotage (10) est conçu pour commander une première valeur d'atténuation pour un pixel donné d'une première trame (Ti) et une seconde valeur d'atténuation pour ledit pixel donné d'une seconde trame (Tᵢ₊₁) suivant temporellement la première trame (Ti), la seconde valeur étant différente de la première valeur mais correspondant à une atténuation substantiellement identique, c'est à dire, différant de moins de 10% et dans lequel le module de pilotage (10) est conçu pour générer une variation temporelle aléatoire de l'atténuation pour un même pixel de l'image d'une trame Ti à la trame suivante Ti+1 de sorte qu'un phénomène de chatoiement généré par l'utilisation de sources lumineuses cohérentes est atténué.

2. Dispositif de formation d'image selon la revendication 1, dans lequel les moyens d'atténuation (14) du faisceau lumineux comprennent une cellule à cristaux liquides (13) apte à impartir au faisceau lumineux une polarisation variable en fonction d'une tension (V) appliquée à ladite cellule (13).

3. Dispositif de formation d'image selon la revendication 2, dans lequel les moyens d'atténuation (14) comprennent un élément de polarisation (15) ayant une direction donnée de polarisation.

4. Dispositif de formation d'image selon la revendication 2 ou 3, dans lequel le module de pilotage (10) est conçu pour déterminer ladite tension (V) en fonction d'une consigne d'atténuation.

5. Dispositif de formation d'image selon l'une des revendications 2 à 4, dans lequel la tension (V) est positive pendant ladite première trame (Ti) et négative pendant ladite seconde trame (Tᵢ₊₁).

6. Dispositif de formation d'image selon l'une des revendications 1 à 5, dans lequel le module de pilotage (10) est conçu pour commander une atténuation constante égale à la première valeur au cours de la première trame (Ti).

7. Dispositif de formation d'image selon l'une des revendications 1 à 6, comprenant une unité de balayage (16) conçue pour balayer une face du diffuseur (18) au moyen du faisceau lumineux atténué.

8. Dispositif de formation d'image selon la revendication 7, dans lequel l'unité de balayage comprend un miroir mobile (16).

9. Afficheur tête haute comprenant un dispositif de formation d'image (2) selon l'une des revendications 1 à 8 et un système d'imagerie (4) conçu pour projeter ladite image.

## Patentansprüche

1. Bildgebungsvorrichtung (2), die Folgendes beinhaltet:
- ein Strahlformungsmodul (12), das dazu ausgelegt ist, einen kohärenten Lichtstrahl zu generieren,
- Mittel zur Abschwächung (14) des Lichtstrahls,
- einen Diffusor (18), der durch den abgeschwächten Lichtstrahl so beleuchtet wird, dass er ein Bild formt,
- ein Ansteuerungsmodul (10), das dazu ausgelegt ist, die Abschwächung des Lichtstrahls durch die Abschwächungsmittel (14) vorzugeben,
**dadurch gekennzeichnet, dass** das Ansteuerungsmodul (10) dazu ausgelegt ist, einen ersten Abschwächungswert für ein gegebenes Pixel eines ersten Rahmens (Tᵢ) und einen zweiten Abschwächungswert für das gegebene Pixel eines zweiten Rahmens (Tᵢ₊₁), der zeitlich auf den ersten Rahmen (Ti) folgt, vorzugeben, wobei sich der zweite Wert von dem ersten Wert unterscheidet, aber einer im Wesentlichen identischen Abschwächung entspricht, das heißt, sich um weniger als 10 % unterscheidet, und wobei das Ansteuerungsmodul (10) dazu ausgelegt ist, eine zufällige zeitliche Abweichung der Abschwächung für ein gleiches Pixel des Bildes von einem Rahmen Ti zu dem nachfolgenden Rahmen Ti+1 zu generieren, sodass ein Speckle-Phänomen, das durch die Verwendung von kohärenten Lichtquellen generiert wird, abgeschwächt wird.

2. Bildgebungsvorrichtung nach Anspruch 1, wobei die Abschwächungsmittel (14) des Lichtstrahls eine Flüssigkristallzelle (13) beinhalten, die dazu fähig ist, dem Lichtstrahl in Abhängigkeit von einer an die Zelle (13) angelegten Spannung (V) eine variable Polarisation zu verleihen.

3. Bildgebungsvorrichtung nach Anspruch 2, wobei die Abschwächungsmittel (14) ein Polarisationselement (15) beinhalten, das eine gegebene Polarisationsrichtung aufweist.

4. Bildgebungsvorrichtung nach Anspruch 2 oder 3, wobei das Ansteuerungsmodul (10) dazu ausgelegt ist, die Spannung (V) in Abhängigkeit von einem Abschwächungssollwert zu bestimmen.

5. Bildgebungsvorrichtung nach einem der Ansprüche 2 bis 4, wobei die Spannung (V) während des ersten Rahmens (Tᵢ) positiv ist und während des zweiten Rahmens (Tᵢ₊₁) negativ ist.

6. Bildgebungsvorrichtung nach einem der Ansprüche 1 bis 5, wobei das Ansteuerungsmodul (10) dazu ausgelegt ist, während des ersten Rahmens eine konstante Abschwächung (Tᵢ), die gleich dem ersten Wert ist, vorzugeben.

7. Bildgebungsvorrichtung nach einem der Ansprüche 1 bis 6, die eine Scaneinheit (16) beinhaltet, die dazu ausgelegt ist, eine Seite des Diffusors (18) mit Hilfe des abgeschwächten Lichtstrahls zu scannen.

8. Bildgebungsvorrichtung nach Anspruch 7, wobei die Scaneinheit einen beweglichen Spiegel (16) beinhaltet.

9. Head-Up-Anzeige, die eine Bildgebungsvorrichtung (2) nach einem der Ansprüche 1 bis 8 und ein Abbildungssystem (4), das zum Projizieren des Bildes ausgelegt ist, beinhaltet.

## Claims

1. Image-forming device (2), comprising:
- a beam-forming module (12) designed to generate a coherent light beam,
- light beam attenuation means (14),
- a diffuser (18) lit by the attenuated light beam so as to form an image,
- a driver module (10) designed to control the attenuation of the light beam by the attenuation means (14),
**characterized in that** the driver module (10) is designed to control a first attenuation value for a given pixel of a first frame (Tᵢ) and a second attenuation value for said given pixel of a second frame (Tᵢ₊₁) following the first frame (Tᵢ) in time, the second value being different from the first value but corresponding to an attenuation that is substantially identical, that is to say differing by less than 10% and in which the driver module (10) is designed to generate a random temporal variation of the attenuation for a same pixel of the image from one frame Tᵢ to the next frame Tᵢ₊₁ such that an iridescence effect generated by the use of coherent light sources is attenuated.

2. Image-forming device according to Claim 1, wherein the light beam attenuation means (14) comprise a liquid crystal cell (13) capable of imparting on the light beam a polarisation that is variable as a function of a voltage (V) applied to said cell (13).

3. Image-forming device according to Claim 2, wherein the attenuation means (14) comprise a polarisation element (15) having a given direction of polarisation.

4. Image-forming device according to Claim 2 or 3, wherein the driver module (10) is designed to determine said voltage (V) as a function of an attenuation setpoint.

5. Image-forming device according to one of Claims 2 to 4, wherein the voltage (V) is positive during said first frame (Ti) and negative during said second frame (Tᵢ₊₁).

6. Image-forming device according to one of Claims 1 to 5, wherein the driver module (10) is designed to control a constant attenuation equal to the first value during the first frame (Tᵢ).

7. Image-forming device according to one of Claims 1 to 6, comprising a scanning unit (16) designed to scan a face of the diffuser (18) by means of the attenuated light beam.

8. Image-forming device according to Claim 7, wherein the scanning unit comprises a movable mirror (16).

9. Head-up display comprising an image-forming device (2) according to one of Claims 1 to 8 and an imaging system (4) designed to project said image.
